# EUROPEAN PATENT APPLICATION

(11) **EP 2 688 352 A1**
(43) Date of publication of application: **22.01.2014**
(21) Application number: 12305873.7
(22) Date of filing: 19.07.2012
(51) Int. Cl.: H04W 72/12

(54) **Apparatus, method and computer programm for scheduling in a small cell base station transceiver**

(71) Applicant: Alcatel Lucent, 75007 Paris (FR)
(72) Inventor: Stanze, Oliver, 70499 Stuttgart (DE); Weber, Andreas, 74251 Lehrensteinsfeld (DE)
(74) Representative: 2SPL Patentanwälte

(57) **Abstract**

Embodiments relate to an apparatus 10, a method and a computer program for a small cell base station transceiver 100. The small cell base station transceiver 100 is operable to communicate with a number of active mobile transceivers. The small cell base station transceiver 100 is located in a coverage area of a macro cell base station transceiver. The apparatus 10 comprises a counter 12 for determining whether the number of active mobile transceivers lies above a threshold and a scheduler 14 for scheduling the number of active mobile transceivers based on whether the number of active mobile transceivers lies above or below the threshold.

## Description

Embodiments of the present invention relate to mobile communications, more particularly but not exclusively to radio resource management for a small cell base station transceiver for a mobile communication system.

### Background

Nowadays mobile communication networks heterogeneous architectures become more and more important. Heterogeneous Networks (HetNets) are networks, which utilize cell types of different sizes, as, for example, macro cells and small cells such as metro cells, pico cells, and femto cells. Such cells are established by base station transceivers for which their coverage areas are determined by their transmission power and interference condition. Small cells are cells having a smaller coverage area than macro cells. In some network scenarios the small cells' coverage area can be surrounded by the coverage area of a macro cell. The small cells can be deployed to extend the capacity of the network.

With regard to standardization, within the 3^{rd} Generation Partnership Project (3GPP), HetNets have been added to the scope of the Long Term Evolution-Advanced (LTE-A) work item. Since the cells or base stations in such networks may utilize the same frequency resources, such architectures can suffer from interference created by the overlapping coverage areas of these cells. Therefore enhanced Inter-Cell Interference Coordination (eICIC) for co-channel HetNet deployment is one of the key techniques for LTE Release 10 (Rel-10). Co-channel HetNets comprise macro cells and small cells operating on the same frequency channel. Such deployments present some specific interference scenarios for which eICIC techniques are utilized.

In one example scenario, the small cells are open to users of the macro cell network. In order to ensure that such small cells carry a useful share of the total traffic load, User Equipment (UE) or mobile transceivers may be programmed or configured to associate preferentially with the small cells rather than the macro cells, for example, by biasing the Reference Signal Received Power (RSRP) threshold at which they will select a small cell to associate with. Under such conditions, UEs near the edge of a small cell's coverage area may suffer strong interference from one or more macro cells. In order to alleviate such interference, some sub-frames may be configured as "blank" or "almost blank" in a macro cell. A blank sub-frame may contain no transmission from the macro cell, while an "almost blank" sub-frame typically contains no payload data transmission and little or no control signaling transmission, but may contain reference signal transmissions in order to ensure backward compatibility with legacy terminals, which expect to find the reference signals for measurements but are unaware of the configuration of almost blank sub-frames. Almost blank sub-frames may also contain synchronization signals, broadcast control information and/or paging signals. The utilization of "blank" or "almost blank" sub-frames enables reduced or even suppressed interference for the UEs in the small cell within these sub-frames. Hence, "blank" or "almost blank" sub-frames may be regarded as sub-frames during which at least some radio resources are suspended from transmission, i.e. the transmission power of a macro cell may be reduced on these radio resources.

However, to make use of blank or Almost Blank Sub-frames (ABSs) effectively (note that the term "ABS" is used, and should be understood to include both blank and almost blank sub-frames), signaling is needed from the macro cell to the small cell, e.g. across the corresponding backhaul interface, known in LTE as the "X2" interface. For LTE Rel 10, it has been agreed that this X2 signaling will take the form of two coordination bitmaps to indicate which subframes should be considered for measurements, e.g. one bitmap signals ABS and the other signals non-ABS. Such signaling can help the small cell to schedule data transmissions in the small cell appropriately to avoid interference (e.g. by scheduling transmissions to UEs near the edge of the small cell during ABSs), and to signal to the UEs the sub-frames, which should have low macro cellular interference and should therefore be used for measurements. Examples for such measurements are measurements for Radio Resource Management (RRM), which typically relate to handover, measurements for Radio Link Monitoring (RLM), which typically relate to detection of serving radio link failure, and measurements for Channel State Information (CSI), which typically relate to link adaptation on the serving radio link.

In such an example scenario, Radio Resource Control (RRC) signaling can be utilized to indicate to the UEs the set of sub-frames which they should use to provide up to two measurements (e.g., for RLM/RRM or CSI), where RRC is a signaling protocol standardized by 3GPP for control and configuration signaling.

Another example scenario can arise with HetNets in which the small cells operate on a Closed Subscriber Group (CSG) basis, and are therefore typically not open to users of the macro cellular network. In this case, the small cells can cause strong interference to the macro cell UEs when these macro cell UEs come close to the small cell base station transceivers, however, without having the possibility to associate with them. It may then be beneficial for the macro cells to indicate to their UEs the sub-frames in which they should make resource specific measurements, i.e. the sub-frames in which interference from one or more small cells is reduced or absent. In the following, to a base station transceiver may also be referred to as NodeB (NB) or an eNodeB (eNB) according to the 3GPP terminology.

### Summary

It is one finding of embodiments that in LTE or LTE-A systems enhanced Inter-Cell Interference Cancellation (eICIC) for HetNets can be enabled. If eICIC is used, a macro eNB transmission can be based on a pattern, i.e. ABS and non-ABS. ABS may only contain pilots and control information, but no data or data transmitted with reduced transmission power. It is a further finding that this results in a reduced interference for small cell UEs or small cell mobile transceivers in ABS. Furthermore, this can be exploited be eICIC scheduling strategies to increase or even maximize the system performance. Moreover, there are at least two eICIC scheduling strategies, strict scheduling and dynamic scheduling.

The strict eICIC scheduling strategy may classify a pico or small cell UEs into cell-border UEs and cell-inner UEs. Cell-border UEs may only be scheduled to ABS, while cell-inner UEs are only scheduled to non-ABS. An advantage of this approach may result as cell-border UEs may only provide Channel Quality Indication (CQI) feedback for ABS, and cell-inner UEs may only provide CQI-feedback for non-ABS, which may save UpLink (UL) bandwidth due to the reduced CQI feedback volume. The dynamic scheduling may, compared to the strict scheduling, provide a higher flexibility at the price of a doubled CQI-overhead. A UE may provide CQI feedback for ABS and non-ABS and any UE may be scheduled to any resource. There may not be a classification into cell-border and cell-inner UE. Instead the best suited UEs can be scheduled. In case of cell border mobiles with very bad SINR values, the mobiles may signal that the resource should not be scheduled for it, e.g. using CQI 0 according to the 3GPP specifications in the feedback report.

It is one finding of embodiments that whether strict scheduling or dynamic scheduling is beneficial by a small eNB depends on the number of active small cell UEs. Therefore it is a finding that a small cell eNB may operate an eICIC scheduler, which is adaptive to the number of active small cell UEs. Based on a current number of active small cell UEs the eICIC scheduler may decide whether it follows a strict or dynamic eICIC scheduling strategy.

It is a further finding that whether frequency-selective scheduling can be beneficially exploited also depends on the number of active small cell UEs. In case of a low number of active UEs, there is limited potential to exploit multi-user diversity. In such a situation no or limited gain can be expected from Frequency-Selective Scheduling (FSS). Because of a high overhead for frequency-selective CQI feedback it may be more efficient to apply non-FFS. If the number of active UEs is high the situation can be quite different. Hence, there is a potential gain by applying frequency-selective scheduling and therefore it may be beneficially exploited. Hence, based on a current number of active small cell UEs the eICIC scheduler may decide whether it applies FSS or not.

Embodiments provide an apparatus for a small cell base station transceiver, i.e. embodiments may provide said apparatus to be operated by or included in a small cell base station transceiver. Embodiments may also provide a small cell base station transceiver comprising such a small cell base station transceiver apparatus. The small cell base station transceiver may be operable for a mobile communication network, i.e. embodiments may provide said apparatus to be operated by or included in a base station transceiver. In the following, said apparatus will also be referred to as small cell base station transceiver apparatus. Moreover, the terms mobile communication network and mobile communication system will be used synonymously. The mobile communication system may, for example, correspond to one of the 3GPP-standardized mobile communication networks, as e.g. Long Term Evolution (LTE), an LTE-Advanced (LTE-A), a Universal Mobile Telecommunication System (UMTS) or a UMTS Terrestrial Radio Access network (UTRAN), an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFDMA) network, etc., and/or mobile communication networks with different standards, e.g. Worldwide Interoperability for Microwave Access (WI-MAX).

The small cell base station transceiver is operable to communicate with a number of active mobile transceivers and the small cell base station transceiver is located in a coverage area of a macro cell base station transceiver. In embodiments, the mobile communication system may comprise mobile transceivers and base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, a remote radio head, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate multiple cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas.

In embodiments the small cell base station transceiver apparatus comprises a counter for determining whether the number of active mobile transceivers lies above a threshold. That is to say the apparatus comprises any means for counting, such as a processor, a digital counting device, a controller, etc. The counter is based on a number of active mobile transceivers, i.e. such mobile transceivers, which are associated with the small cell base station transceiver and which are actively transmitting or receiving data to or from the small cell base station transceiver. A mobile transceiver may be considered as an active mobile transceiver when it has communicated a predetermined amount of data in a predetermined amount of time. That is to say in embodiments the predetermined amount of data in the predetermined time can be set such that, for example, mobile transceivers with as certain traffic characteristic can be included or excluded. For example, Voice Over Internet Protocol (VOIP) mobile transceivers may in some scenarios be considered, i.e. their VOIP traffic may generate enough data amount per time for them to be considered as active, in other embodiments they may be considered as inactive.

The threshold may correspond to a predefined number and a hysteresis may be applied to a counted number of active mobile transceivers as will be detailed subsequently. The small cell base station transceiver apparatus further comprises a scheduler for scheduling the number of active mobile transceivers based on whether the number of active mobile transceivers lies above or below the threshold. That is to say, the apparatus comprises means for scheduling, i.e. for assigning radio resources to associated mobile transceivers, such as a processor, a controller, etc. The scheduling is based on whether the number of active mobile transceivers is above or below the threshold in line with the finding that the number of active mobile transceivers may determine which kind of scheduling may be more advantageous. Embodiments may therewith provide the advantage that the scheduling of a small cell base station transceiver can be adapted to the number of active mobile transceivers serviced by the small cell base station transceiver.

In some embodiments the scheduler can be operable to switch between a high state, in which the number of active mobile transceivers lies above the threshold, and a low state, in which the number of active mobile transceivers lies below the threshold. In other words, different scheduling methods or concepts can be carried out in different states of the scheduler, where the states can made dependent on the number of active users. That is to say in some embodiments the scheduler can be implemented as a state machine changing states based on the number of active mobile transceivers. The counter can be further operable to determine whether the number of active mobile transceivers lies below another threshold, and the scheduler can be operable to switch to the high state when the number of active mobile transceivers lies above the threshold, and to the low state, when the number of active mobile transceivers lies below the other threshold. That is to say that a hysteresis can be used based on the threshold and the other threshold. In some embodiments frequent switching between the states can be avoided this way.

In embodiments the macro cell base station transceiver may transmit on a plurality of radio resources. The plurality of radio resources may comprise frequency radio resources, such as, for example, frequency carriers or subcarriers of an OFDM system. Moreover, the plurality of radio resources may comprise time radio resources, such as radio frames, sub-frames, symbols, etc. Moreover, the plurality of radio resources may comprise code radio resources, such as spreading or a channelization codes in a CDMA system. Furthermore, the plurality of radio resources may comprise spatial radio resources, such as spatial sub channels, antenna beams, etc. In some embodiments the macro cell base station transceiver may transmit on some of the radio resources with regular transmission power, i.e. a transmission power which is used to serve mobile transceivers which are associated to the macro cell base station transceiver. Furthermore, the macro cell base station transceiver may transmit on some of the radio resources with reduced transmission power, for example, as consequence of eICIC.

The scheduler, when being in high state, can be operable to subdivide the mobile transceivers in a first group and a second group. The first group may comprise mobile transceivers for which information on a radio channel quality lies above a quality threshold and the second group may comprise mobile transceivers for which information on the radio channel quality lies below the quality threshold. In some embodiments a hysteresis can be implemented to prevent frequent reassignments of mobile transceivers between the two groups. That is to say in embodiments the scheduler may determine information on a radio channel quality from the mobile transceivers. Such information can be provided by the mobile transceivers, e.g. as part of a CQI. The information may indicate a quality of the radio channel between the small cell base station transceiver and a mobile transceiver as it is experienced by the mobile transceiver. For example, the information on the channel quality may refer to a Signal-to-Interference-Ratio (SIR), a Signal-to-Noise-Ratio (SNR), a Signal-to-Interference-and-Noise-Ratio (SINR), a reception power, a Block or Bit Error Rate (BER), a path loss, a preferred Modulation and Coding Scheme (MSC), etc.
Based on said quality information, the scheduler may group the mobile transceivers with a high channel quality in the first group and mobile transceivers with a low quality in the second group.

In embodiments the first group may comprise mobile transceivers which are located closer to the small cell base station transceiver than the mobile transceivers of the second group. Approximately, a mobile transceiver, which is located closer to the small cell base station transceiver may experience a lower path loss and therewith a higher average signal quality than a mobile transceiver, which is located far away from the small cell base station transceiver. This may only be the case in free space. In a practical scenario topology and morphology may determine shadowing effects, such that a closely located mobile transceiver may experience a higher path loss or attenuation than a mobile transceiver, which is located farther away and which may experience Line Of Sight (LOS) propagation to or from the base station transceiver. Taking these effects into account the first group of closer located mobile transceivers may comprise mobile transceivers with a lower path loss or attenuation than the mobile transceivers of the second group.

In further embodiments the small cell base station transceiver apparatus may comprise a transmitter for transmitting information on the radio channel quality reporting configuration to the mobile transceivers of the first group. The transmitter may correspond to any means for transmitting, such as a transmitter for any of the above listed communication systems. The information on the radio channel quality reporting configuration may indicate to provide information on the radio channel quality on the radio resource with regular transmission power of the macro cell base station transceiver. Such a radio resource may correspond to a non-ABS radio frame of the macro cell base station transceiver.

Correspondingly, the apparatus may comprise a transmitter for transmitting information on a radio channel quality reporting configuration to the mobile transceivers of the second group. The information on the radio channel quality reporting configuration may indicate to provide information on the radio channel quality on a radio resource with reduced transmission power of the macro cell base station transceiver. That is to say, in embodiments the apparatus may provide configuration information to the mobile transceivers. For example, the mobile transceivers of the first group, i.e. those which can be located close to the base station transceiver, may be configured for reporting channel quality feedback information on non-ABS frames of the macro cell base station transceiver. The mobile transceivers, which can be located far away from the small cell base station transceiver, i.e. the mobile transceivers of the second group, may be configured to report channel quality information on ABS frames.

In other words, the mobile transceivers, which are located at the cell border of the small cell base station transceiver may be scheduled during ABS frames of the macro cell base station transceiver and configured to report channel quality information on the ABS frames. The mobile transceivers of the first group, which can be located closer to the small cell base station transceiver, can be scheduled on the non-ABS frames, and configured to report channel quality information on the non-ABS frames of the macro cell base station transceiver.

The information on the radio channel quality reporting configuration can further indicate a request for frequency selective radio channel quality information. In other words, the scheduler, when being in the high state, i.e. in case there are many mobile transceivers active in the small cell, may configure the mobile transceivers to report frequency selective radio channel quality information. That is to say, the mobile transceivers may determine channel quality information in a frequency selective way, i.e. separately for multiple subcarriers or groups of subcarriers of, for example, an OFDM system. The channel quality information report, which is then provided to the small cell base station transceiver, may further comprise feedback information for different subcarriers, such that the scheduler can be enabled to exploit frequency diversity gain in the frequency domain. Correspondingly, the scheduler can be operable to perform frequency selective scheduling, i.e. to consider different channel qualities in the frequency domain when determining which radio resources to assign to a mobile transceiver.

In further embodiments the small cell base station transceiver apparatus may comprise a transmitter for transmitting, when the scheduler is in the low state, information on a radio channel quality reporting configuration to the mobile transceivers. The information on the radio channel quality reporting configuration may then indicate to provide information on the radio channel quality on a radio resource with regular transmission power of the macro cell base station transceiver, such as during a non-ABS radio frame. Furthermore, the information on the radio channel quality reporting configuration may indicate to provide information on the radio channel quality on a radio resource with reduced transmission power of the macro cell base station transceiver. In other words, when the scheduler is in the low state, i.e. when there are only a few active mobile transceivers in the coverage of the small cell base station transceiver, the mobile transceivers may be configured to report radio channel quality on ABS and non-ABS frames.

The information on the radio channel quality reporting configuration may further indicate a request for non-frequency selective radio channel quality information. Moreover, the scheduler can be operable to perform non-frequency selective scheduling. That is to say, when the scheduler is in the low state, i.e. when there are only a few active mobile transceivers in the coverage of the small cell base station transceiver, non-frequency selective scheduling may be applied and consequently the mobile transceivers may be configured to provide only non-frequency selective channel quality information. Hence, the scheduler can be operable to perform frequency selective scheduling when being in the high state and non-frequency selective scheduling when being in the low state. Embodiments may provide the advantage that the application of frequency selective or non-frequency selective scheduling can be made adaptive to the number of UEs associated to the small cell base station transceiver.

In further embodiments the scheduler can be operable to switch between two or more states based on the number of active mobile transceivers. In other words, in further embodiments there can be more states than just the above-described high and low states; there may be intermediate states in between. The apparatus can then be operable to provide different feedback reporting configurations to the active mobile transceivers in the two or more states. The scheduler can be operable to schedule the active mobile transceivers based on information on a radio channel quality from the active mobile transceivers and based on different transmission power settings of the macro cell base station transceiver on different radio resources.

Embodiments may therewith provide the advantage that they can adapt to different numbers of mobile transceivers in the small cell's coverage area. Embodiments may enable an adaptation of the scheduling with respect to the power settings of the macro base station transceiver, i.e. distinguishing between ABSs or non-ABSs frames and/or embodiments may distinguish between frequency and non-frequency selective scheduling and channel quality reporting based on the number of active mobile transceivers.

In some embodiments the scheduler can be operable to schedule a group of mobile transceivers dynamically by using all of the different radio resources for data transmission. Hence, mobile transceivers are assigned or scheduled to radio resources for data transmission dynamically and a mobile transceiver may be assigned a radio resource on which the macro base station transceiver transmits regularly or on which it transmits with reduced transmission power. When being scheduled dynamically in embodiments, a mobile transceiver may be assigned anyone of available radio resources dynamically. The scheduler can also be operable to schedule at least one other group of mobile transceivers strictly by using radio resources with reduced transmission power of the macro cell base station transceiver for a subgroup of the other group of users, and by using radio resources with regular transmission power of the macro cell base station transceiver for another subgroup of the other group of mobile transceivers.

In other words, in some embodiments the scheduler may be operable to form a group of mobile transceivers, in which the mobile transceivers are scheduled dynamically using all radio resources. The scheduler can be operable to form another group of mobile transceivers, which are scheduled strictly. The group of mobile transceivers being scheduled strictly can be subdivided in two subgroups. The first subgroup may be scheduled on radio resources on which the macro base station transceiver transmits with reduced transmission power (ABS frame). The other subgroup of mobile transceivers can be scheduled on radio resources on which the macro base station transceiver transmits with regular transmission power (non-ABS frame), in line with the above description.

Embodiments further provide a method for a small cell base station transceiver. The small cell base station transceiver is operable to communicate with a number of active mobile transceivers. The small cell base station transceiver lies in the coverage area of a macro cell base station transceiver. The method comprises determining whether the number of active mobile transceivers lies above a threshold and scheduling the number of active mobile transceivers based on whether the number of active mobile transceivers lies above or below the threshold.

Embodiments further provide a computer program having a program code for performing one of the above-described methods, when the computer program is executed on a computer or processor.

Some embodiments comprise a digital control circuit installed within the apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

### Brief description of the Figures

Some embodiments of apparatuses and/or methods will be described in the following by way of example only, and with reference to the accompanying figures, in which
Fig. 1 illustrates an overview of an embodiment in a network scenario;
Fig. 2 shows an embodiment of a small cell base station transceiver apparatus;
Fig. 3 shows a view chart depicting simulation results for a mean throughput versus a user arrival rate;
Fig. 4 shows a view chart depicting simulation results for a cell border throughput versus a spectral efficiency for different feedback periods;
Fig. 5 shows a block diagram of a flow chart of an embodiment of a method for a small cell base station transceiver; and
Fig. 6 shows another block diagram of a flow chart of an embodiment of a method for a small cell base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

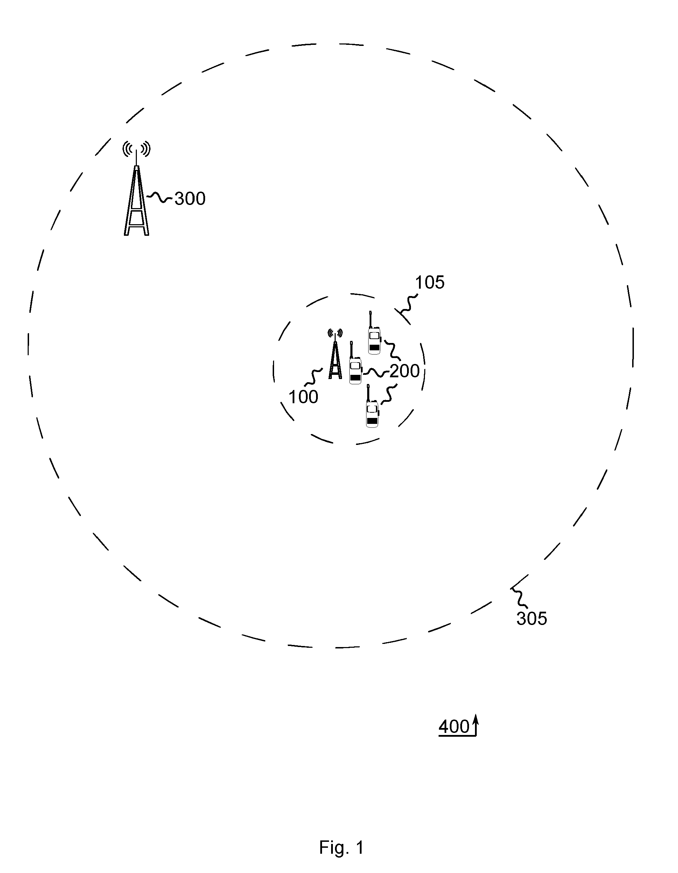

Fig. 1 illustrates an overview of an embodiment of a small cell base station transceiver 100 in a network scenario 400 with a macro cell base station transceiver 300 and some mobile transceivers 200. Fig. 1 further illustrates the coverage area 305 of the macro cell base station transceiver 300 and the coverage area 105 of the small cell base station transceiver 100. The small cell base station transceiver 100 lies in the coverage area 305 of the macro cell base station transceiver 300. The mobile transceivers 200 are located in the coverage area 105 of the small cell base station transceiver. All components are compliant to an LTE or LTE-A network in the present embodiment. Moreover, the small cell base station transceiver 100 corresponds to a pico cell base station transceiver 100.

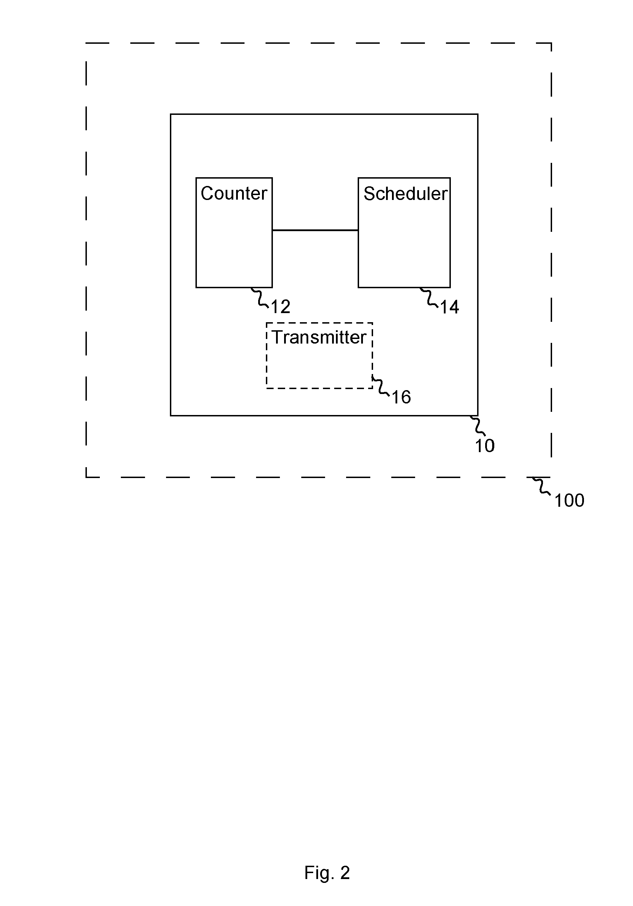

Fig. 2 shows an embodiment of a small cell base station transceiver apparatus 10 for the small cell base station transceiver 100. As Fig. 2 refers to an embodiment of the small cell base station transceiver apparatus 10 the small cell base station transceiver 100 is shown in broken lines as it is optional. The small cell base station transceiver 100 is operable to communicate with a number of active mobile transceivers 200. In line with Fig. 1 the small cell base station transceiver 100 is located in a coverage area 305 of a macro cell base station transceiver 300. The apparatus 10 comprises a counter 12 for determining whether the number of active mobile transceivers lies above a threshold. The apparatus 10 further comprises a scheduler 14 for scheduling the number of active mobile transceivers based on whether the number of active mobile transceivers lies above or below the threshold. Fig. 2 further illustrates that the counter 12 and the scheduler 14 are coupled to each other. The embodiment of the apparatus 10 further comprises an optional transmitter 16, which will be detailed subsequently.

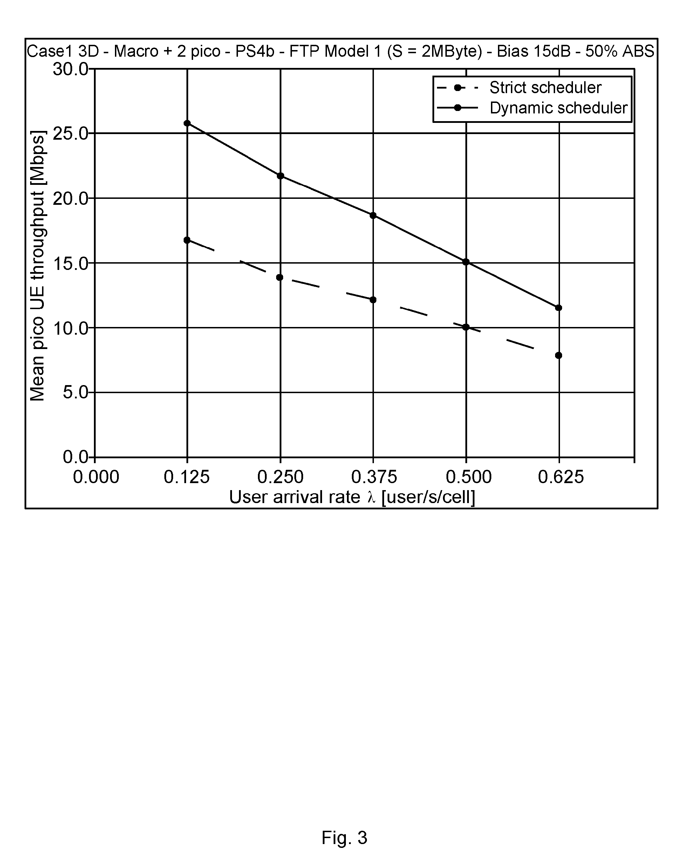

The embodiment exploits the finding that if the number of active UEs, i.e. mobile transceivers 200, is low, dynamic scheduling may outperform strict scheduling. This is further illustrated in Fig. 3. Fig. 3 shows a view chart depicting simulation results for a mean ThroughPut (TP) of a UE in a pico cell in Mbps versus a user arrival rate λ in users per second and cell for strict scheduling (broken line) and dynamic scheduling (solid line). In the following the terms user, UE, and mobile transceiver are used synonymously. Fig. 3 presents the mean UE throughput for low load scenarios. The number of active UEs correlates with user arrival rate λ. The used simulation scenario is based on a Case1 3D scenario as specified in 3GPP TR 36.814. The intersite distance between the macro eNBs is 500m. A 3D antenna model is used for the macro, whereby an antenna downtilt of 15° is applied. 2 pico eNBs are placed inside the coverage area of each macro eNB. The FTP model 1 is used to model the traffic, thereby a file size of 2 MByte is used. The UE distribution follows the (HotSpot) configuration 4b. A bias of 15dB between is used for the association between macro and pico, i.e. a UE associates with the pico if the RSRP of the strongest macro eNB does not exceed the RSRP of the strongest pico eNB by more than 15dB. eICIC is applied, whereby 50% of the resources of a macro eNB are ABS. As can be seen from the view chart the mean UE TP for dynamic scheduling can be up to 60% higher than for strict scheduling. This can be based on strict scheduling a UE to ABS or non-ABS. This difference may justify the higher overhead for CQI feedback for dynamic scheduling.

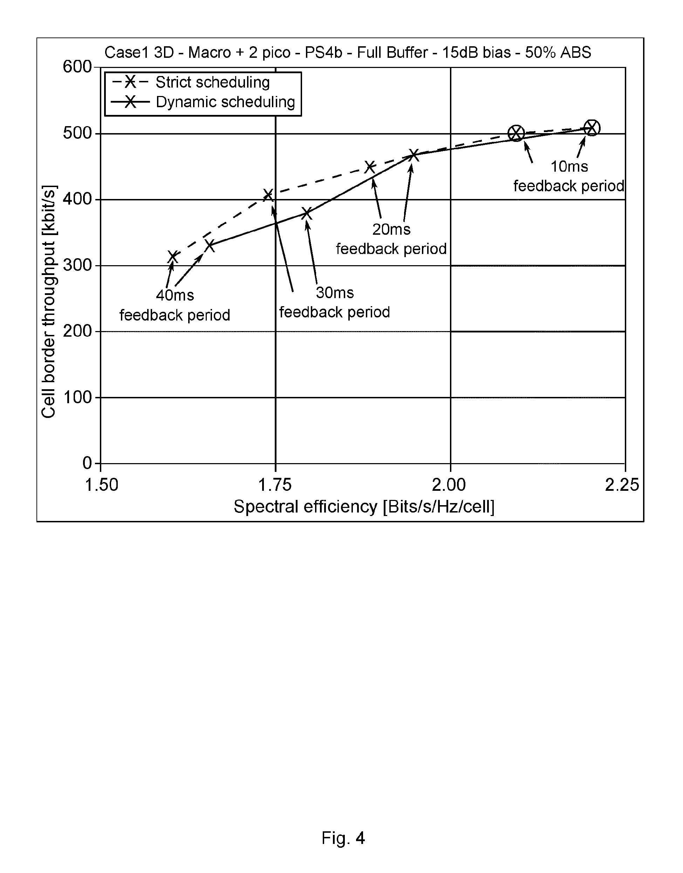

For a high number of active UEs the situation is quite different. This is shown in Fig. 4. Fig. 4 illustrates a view chart depicting simulation results for a cell border TP (i.e. 5%-quantile of the UE TP) versus a spectral efficiency for different feedback periods for strict scheduling (broken line) and dynamic scheduling (solid line). Fig. 4 presents the cell-border TP in kbit/s and the spectral efficiency in Bits/s/Hz per cell for different feedback periods (10ms, 20ms, 30ms, and 40ms) in a scenario with 30 active UEs per macro cell area. The used simulation scenario is similar to the scenario used for Fig. 3, except that full buffer traffic is used instead of non-full buffer traffic. Thereby the number of active UEs per macro coverage area is 30.

For the same feedback period, dynamic scheduling shows a small gain in spectral efficiency, e.g. ∼5% for 10ms feedback period, which is indicated by circled markers in Fig. 4, compared to strict scheduling. But this is may not be a fair comparison, because dynamic scheduling may require twice as much feedback (separate feedback for ABS and non-ABS) as strict scheduling. Especially for a high number of active UEs it might be difficult to provide this amount of feedback. For a fair comparison, strict and dynamic scheduling are compared for the same "amount" of feedback. Therefore a double feedback period has to be assumed for dynamic scheduling. In this case, strict scheduling outperforms dynamic scheduling, e.g. ∼7% gain in spectral efficiency for 10ms feedback period and ∼12% gain in spectral efficiency and ∼30% in cell border throughput for 20ms feedback. This shows that for a high number of active UEs strict scheduling can be beneficially applied.

Embodiments provide the advantage that instead of a fixed combination of eICIC scheduling strategy (strict or dynamic) and frequency-selective scheduling (activated or deactivation), which may fit to an expected number of UEs in the pico cell an adaptive concept can be applied. If only a low number of active UEs is expected for the pico cell, a combination of dynamic eICIC scheduling and deactivated frequency selective scheduling (FSS) may make sense. Otherwise if the expected number of active UEs is high a combination of strict scheduling and activated FSS may be better suited.

The real number of active UEs might differ from the expected number of UEs. So a fixed combination of eICIC scheduling and frequency selective scheduling might be suboptimal. The number or active UEs might also change over time, so a fix configuration may be suboptimal.

In the following more details of an embodiment are presented. In the following, the scheduler 14 is operable to switch between a high state, in which the number of active mobile transceivers lies above the threshold, and a low state, in which the number of active mobile transceivers lies below the threshold. Thereby the pico eNB scheduler 14 is either in state FEW_UEs, i.e. in low state, or MANY_UEs, i.e. in high state.

In the present embodiment, if the pico eNB scheduler 14 is in state FEW_UEs, it will apply dynamic eICIC scheduling and it may not apply FSS. Hence, in line with Fig. 2, the apparatus 10 further comprises a transmitter 16 for transmitting, when the scheduler 14 is in the low state, information on a radio channel quality reporting configuration to the active mobile transceivers. The information on the radio channel quality reporting configuration indicates to provide information on the radio channel quality on a radio resource with regular transmission power of the macro cell base station transceiver 300 and it indicates to provide information on the radio channel quality on a radio resource with reduced transmission power of the macro cell base station transceiver 300. Hence in the present embodiment the radio resource on which the macro cell base station transceiver 300 transmits with regular transmission power corresponds to a non-ABS-frame and the radio resource on which the macro cell base station transceiver 300 transmits with reduced transmission power corresponds to an ABS-frame. That is to say, when in FEW_UEs, the scheduler 14 may not distinguish the UEs with respect to their feedback configuration between ABS and non-ABS-frames.

The information on the radio channel quality reporting configuration further indicates a request for non-frequency-selective radio channel quality information and the scheduler 14 is operable to perform non-frequency selective scheduling. The available feedback capacity will be used to provide wideband CQI for ABS and non-ABS with a relatively high periodicity.

If the pico eNB scheduler 14 is in state MANY_UEs, i.e. in high state, it will apply strict eICIC scheduling and will also apply FSS in the present embodiment. The scheduler 14 is operable to sub-divide the active mobile transceivers in a first group and a second group, wherein the first group comprises active mobile transceivers for which an information on a radio channel quality lies above a quality threshold, and the second group comprises active mobile transceivers for which an information on a radio channel quality lies below the quality threshold. The scheduler 14 is further operable to schedule a mobile transceiver from the second group on a radio resource with reduced transmission power of the macro cell base station transceiver 300, i.e. on an ABS-frame. The scheduler 14 is further operable to schedule a mobile transceiver from the first group on a radio resource with regular transmission power of the macro cell base station transceiver 300, i.e. on a non-ABS-frame. The first group comprises active mobile transceivers located closer to the pico cell base station transceiver 100, i.e. cell-inner UEs, than the active mobile transceivers of the second group, i.e. the cell-border UEs.

Moreover, the transmitter 16 transmits information on a radio channel quality reporting configuration to the active mobile transceivers of the first group. This information on the radio channel quality reporting configuration indicates to provide information on the radio channel quality on a radio resource with regular transmission power of the macro cell base station transceiver 300, i.e. for non-ABS-frames. The transmitter 16 also transmits information on a radio channel quality reporting configuration to the active mobile transceivers of the second group. This information on the radio channel quality reporting configuration indicates to provide information on the radio channel quality on a radio resource with reduced transmission power of the macro cell base station transceiver 300, i.e. for ABS-frames. The information on the radio channel quality reporting configuration further indicates a request for frequency-selective radio channel quality information and the scheduler 14 is operable to perform frequency selective scheduling.

Hence, the available feedback capacity will be used to provide frequency-selective CQIs. Thereby cell-border UEs will provide frequency-selective CQIs only for ABS, and cell-inner UEs will provide frequency-selective CQIs only for non-ABS frames. The scheduler 14 is operable to perform frequency selective scheduling when being in the high state and non-frequency selective scheduling when being in the low state.

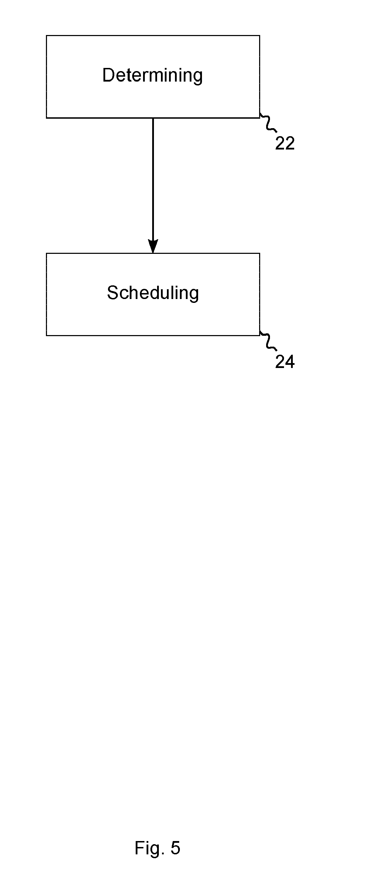

Fig. 5 shows a block diagram of a flow chart of an embodiment of a method for a small cell base station transceiver 100. The small cell base station transceiver 100 is operable to communicate with a number of active mobile transceivers 200. The small cell base station transceiver 100 lies in a coverage area of a macro cell base station transceiver 300. The method comprises a step of determining 22 whether the number of active mobile transceivers lies above a threshold and a step of scheduling 24 the number of active mobile transceivers based on whether the number of active mobile transceivers lies above or below the threshold.

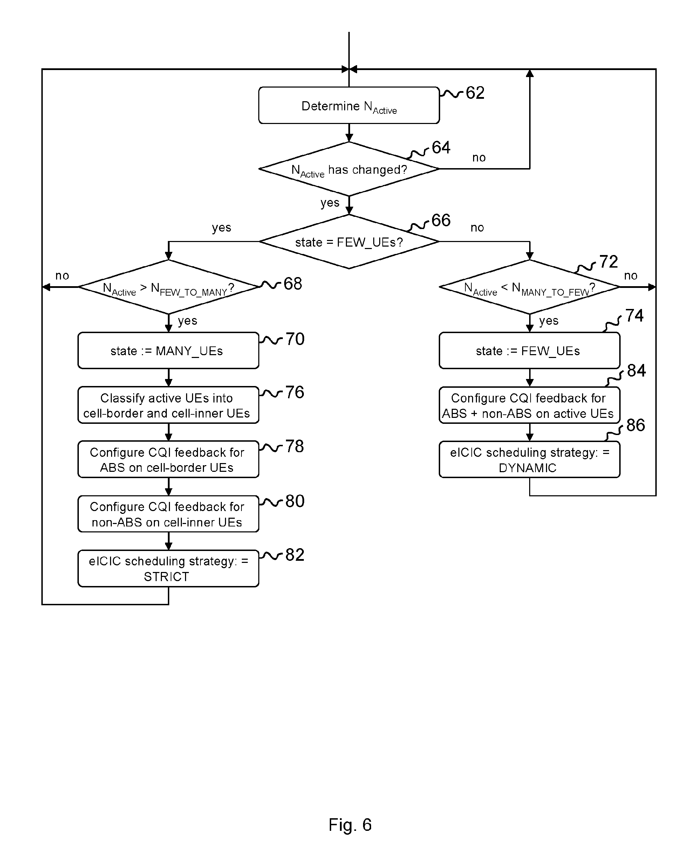

In the following, more details of an embodiment will be provided with the help of the flow chart displayed in Fig. 6. The pico eNB 100 monitors or determines N_{Active}, the number of active UEs 200, i.e. UEs 200 which have sent or received data in a certain time interval. This is also shown in step 62 in Fig. 6. The pico eNB changes its state, if it is in state FEW_UEs and N_{Active} >Threshold_{FEW_TO_MANY}, corresponding to the above described threshold.

In the present embodiment the counter 12 is further operable to determine whether the number of active mobile transceivers lies below another threshold Threshold-FEW_TO_MANY. The scheduler 14 is operable to switch to the high state when the number of active mobile transceivers lies above the threshold, Threshold_{FEW_TO_MANY}, and to the low state, when the number of active mobile transceivers 200 lies below the other threshold, Threshold_{MANY_TO_FEW}. Hence, when the scheduler 14 is in state MANY_UEs and N_{Active} < Threshold_{MANY_TO_FEW} it switches to the low state.

Threshold_{MANY_TO_FEW} < Threshold_{FEW_TO_MANY} realizes a hysteresis, which avoids frequent state changes in the present embodiment. The scheduler therefore determines whether N_{Active} has changed in step 64 and whether the present state is FEW_UEs in step 66.

If the present state is FEW_UEs then in step 68 the scheduler 14 determines whether N_{Active} > Threshold_{FEW_TO_MANY}, indicated by N_{FEW_TO_MANY} in Fig. 6. If this is not the case everything remains unchanged and the procedure restarts at the beginning. Otherwise the state is changed to MANY_UEs in step 70.

If the present state is not FEW_UEs then in step 72 the scheduler 14 determines whether N_{Active} < Threshold_{MANY_TO_EW}, indicated by N_{MANY_TO_FEW} in Fig. 6. If this is not the case everything remains unchanged and the procedure restarts at the beginning. Otherwise the state is changed to FEW_UEs in step 74.

If the pico eNB 100 changes its state to MANY_UEs, cf. step 70 in Fig 6, it will classify its active UEs 200 into cell-border and cell-inner UEs in step 76. By sending CQI-Report-Configuration information elements, cf. 3GPP Technical Specification (TS) 36.331 V10.4.0; "Radio Resource Control; Protocol Specification; Release 10", December 2011, to the active UEs 200. The eNB 100 adapts the CQI generation of the UEs 200. Cell-border UEs will be configured to provide frequency-selective CQI feedback for ABS, cf. step 78 in Fig. 6, and cell-inner UE will be configured to provide to provide frequency-selective CQI feedback for non-ABS, cf. step 80 in Fig. 6. Based on this feedback the pico eNB scheduler 14 can perform frequency-selective strict eICIC scheduling in state MANY_UEs as indicated in step 82 of Fig. 6.

If a pico eNB changes its state to FEW_UEs, cf. step 74 in Fig. 6, it adapts the CQI feedback generation of the active UEs 200 by sending CQI-Report configuration information elements to the active UEs 200, cf. step 84 in Fig. 6. Following, all active UEs 200 will provide separate wideband CQIs for ABS and non-ABS. Based on this feedback the pico eNB scheduler 14 performs non-frequency-selective dynamic eICIC scheduling in state FEW_UEs as indicated in step 86. Fig. 6 summarizes the adaptive eICIC scheduling for pico eNB 100.

In a further embodiment adaptive eICIC scheduling may comprise more than two states. Hence, in embodiments the scheduler 14 can be operable to switch between two or more states based on the number of active mobile transceivers. The apparatus 10 is then operable to provide different feedback reporting configurations to the active mobile transceivers in the two or more states. The scheduler 14 is then operable to schedule the active mobile transceivers based on information on a radio channel quality from the active mobile transceivers and based on different transmission power settings of the macro cell base station transceiver 300 on different radio resources.

Moreover, there can be additional states "between" FEW_UEs and MANY_UEs. These states may differ in the CQI feedback configuration of the active UEs, e.g. feedback interval. In another embodiment, additional states "between" FEW_UEs and MANY_UEs are introduced, where mobiles or UEs close to the cell border and mobiles or UEs close to the cell center are strictly scheduled, while the other mobiles are dynamically scheduled. Hence, the scheduler 14 can be operable to schedule a group of mobile transceivers dynamically by using all of the different radio resources for data transmission. The scheduler 14 can be operable to schedule at least one other group of mobile transceivers strictly by using radio resources with reduced transmission power of the macro cell base station transceiver 300 for a subgroup of the other group of mobile transceivers, and by using radio resources with regular transmission power of the macro cell base station transceiver 300 for another subgroup of the other group of mobile transceivers.

In another embodiment N_{active} may only contain UEs, which have sent or received a certain minimum amount of data in a certain or predetermined period of time. In a further embodiment only the eICIC scheduling strategy or the decision whether FSS is used or may be adapted on basis of N_{active}, but not both.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks labeled as "means", "means for counting", "means for determining", or "means for transmitting", may be provided through the use of dedicated hardware, as e.g. a processor, a counter, a determiner, a transmitter as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (10) for a small cell base station transceiver (100), the small cell base station transceiver (100) being operable to communicate with a number of active mobile transceivers (200), wherein the small cell base station transceiver (100) is located in a coverage area (305) of a macro cell base station transceiver (300), the apparatus (10) comprising
a counter (12) for determining whether the number of active mobile transceivers lies above a threshold; and
a scheduler (14) for scheduling the number of active mobile transceivers based on whether the number of active mobile transceivers lies above or below the threshold.

2. The apparatus (10) of claim 1, wherein the scheduler (14) is operable to switch between a high state, in which the number of active mobile transceivers lies above the threshold, and a low state, in which the number of active mobile transceivers lies below the threshold, and/or wherein a mobile transceiver is considered as an active mobile transceiver when it has communicated a predetermined amount of data in a predetermined amount of time.

3. The apparatus (10) of claim 2, wherein the counter (12) is further operable to determine whether the number of active mobile transceivers lies below another threshold, and wherein the scheduler (14) is operable to switch to the high state when the number of active mobile transceivers lies above the threshold, and to the low state, when the number of active mobile transceivers lies below the other threshold.

4. The apparatus (10) of claim 2, wherein the macro cell base station transceiver (300) transmits on a plurality of radio resources, where transmissions on some of the radio resources are with regular transmission power and transmissions on some of the radio resources are with reduced transmission power, and wherein the scheduler (14), when being in the high state, is operable to sub-divide the active mobile transceivers in a first group and a second group, wherein the first group comprises active mobile transceivers for which an information on a radio channel quality lies above a quality threshold and wherein the second group comprises active mobile transceivers for which an information on a radio channel quality lies below the quality threshold, and wherein the scheduler (14) is further operable to schedule a mobile transceiver from the second group on a radio resource with reduced transmission power of the macro cell base station transceiver (300), and/or wherein the scheduler (14) is further operable to schedule a mobile transceiver from the first group on a radio resource with regular transmission power of the macro cell base station transceiver (300).

5. The apparatus (10) of claim 4, wherein the first group comprises active mobile transceivers located closer to the small cell base station transceiver (100) than the active mobile transceivers of the second group.

6. The apparatus (10) of claim 4, further comprising a transmitter (16) for transmitting information on a radio channel quality reporting configuration to the active mobile transceivers of the first group, the information on the radio channel quality reporting configuration indicating to provide information on the radio channel quality on a radio resource with regular transmission power of the macro cell base station transceiver (300), and/or further comprising a transmitter (16) for transmitting information on a radio channel quality reporting configuration to the active mobile transceivers of the second group, the information on the radio channel quality reporting configuration indicating to provide information on the radio channel quality on a radio resource with reduced transmission power of the macro cell base station transceiver (300).

7. The apparatus (10) of claim 6, wherein the information on the radio channel quality reporting configuration further indicates a request for frequency-selective radio channel quality information.

8. The apparatus (10) of claim 6, wherein the scheduler (14) is operable to perform frequency selective scheduling.

9. The apparatus (10) of claim 2, further comprising a transmitter (16) for transmitting, when the scheduler (14) is in the low state, information on a radio channel quality reporting configuration to the active mobile transceivers, the information on the radio channel quality reporting configuration indicating to provide information on the radio channel quality on a radio resource with regular transmission power of the macro cell base station transceiver (300) and indicating to provide information on the radio channel quality on a radio resource with reduced transmission power of the macro cell base station transceiver (300).

10. The apparatus (10) of claim 9, wherein the information on the radio channel quality reporting configuration further indicates a request for non-frequency-selective radio channel quality information.

11. The apparatus (10) of claim 9, wherein the scheduler (14) is operable to perform non-frequency selective scheduling.

12. The apparatus (10) of claim 2, wherein the scheduler (14) is operable to perform frequency selective scheduling when being in the high state and non-frequency selective scheduling when being in the low state.

13. The apparatus (10) of claim 1, wherein the scheduler (14) is operable to switch between two or more states based on the number of active mobile transceivers, wherein the apparatus (10) is operable to provide different feedback reporting configurations to the active mobile transceivers in the two or more states, wherein the scheduler (14) is operable to schedule the active mobile transceivers based on information on a radio channel quality from the active mobile transceivers and based on different transmission power settings of the macro cell base station transceiver (300) on different radio resources, and/or wherein the scheduler (14) is operable to schedule a group of mobile transceivers dynamically by using all of the different radio resources for data transmission and wherein the scheduler (14) is operable to schedule at least one other group of mobile transceivers strictly by using radio resources with reduced transmission power of the macro cell base station transceiver (300) for a subgroup of the other group of mobile transceivers, and by using radio resources with regular transmission power of the macro cell base station transceiver (300) for another subgroup of the other group of mobile transceivers.

14. A method for a small cell base station transceiver (100), the small cell base station transceiver (100) being operable to communicate with a number of active mobile transceivers (200), wherein the small cell base station transceiver (100) lies in a coverage area (305) of a macro cell base station transceiver (300), the method comprising
determining (22) whether the number of active mobile transceivers lies above a threshold; and
scheduling (24) the number of active mobile transceivers based on whether the number of active mobile transceivers lies above or below the threshold.

15. A computer program having a program code for performing the method of claim 14, when the computer program is executed on a computer or processor.
